# FASCICULE DE BREVET EUROPEEN

(11) **EP 3 263 450 B1**
(45) Date de publication et mention de la délivrance du brevet: **09.10.2019**
(21) Numéro de dépôt: 17178220.4
(22) Date de dépôt: 27.06.2017
(51) Int. Cl.: B64C 25/14, B64C 25/26

(54) **ATTERRISSEUR D'AÉRONEF À ACTIONNEUR DE MANOEUVRE ROTATIF**
FAHRWERK EINES LUFTFAHRZEUGS MIT DREHBAREM BEDIENUNGSSTELLGLIED
AIRCRAFT UNDERCARRIAGE WITH A ROTARY DRIVE ACTUATOR

(30) Priorité: 01.07.2016 FR 1656315
(43) Date de publication de la demande: 03.01.2018
(73) Titulaire: Safran Landing Systems, 78140 Vélizy-Villacoublay (FR)
(72) Inventeur: DUCOS, Dominique, 78140 VELIZY-VILLACOUBLAY (FR); HENRION, Philippe, 78140 VELIZY-VILLACOUBLAY (FR)
(74) Mandataire: Lavialle, Bruno François Stéphane

(56) Documents cités:
- FR-A1- 2 946 319
- FR-A1- 3 022 886
- US-A1- 2013 299 633

## Description

L'invention est relative à un atterrisseur d'aéronef à actionneur de manoeuvre rotatif.

### ARRIERE-PLAN TECHNOLOGIQUE DE L'INVENTION

On connaît des atterrisseurs d'aéronef montés articulés sur une structure de l'aéronef entre une position déployée et une position rétractée. En position déployée, l'atterrisseur est généralement stabilisé par une contrefiche qui est attelée à l'atterrisseur et à la structure de l'aéronef, et qui comporte deux éléments articulés entre eux et maintenus en position alignée. Pour permettre le relevage de l'atterrisseur, on provoque le désalignement des éléments de la contrefiche afin de permettre le pivotement de l'atterrisseur vers sa position rétractée sous l'action d'un actionneur de manoeuvre.

On connaît du document FR 2 946 319 A1 des atterrisseurs dans lesquels l'actionneur de manoeuvre est un actionneur rotatif agissant sur l'un des éléments de la contrefiche. L'actionneur de manoeuvre est généralement fixé à la structure de l'aéronef et entraîne l'un des éléments de la contrefiche, soit directement, soit par l'intermédiaire d'un embiellage. La structure de l'aéronef doit alors être dimensionnée pour reprendre les efforts et le couple développé par l'actionneur de manoeuvre lors de la manoeuvre de l'atterrisseur.

### OBJET DE L'INVENTION

L'invention a pour objet de proposer une installation de l'atterrisseur soulageant la structure de l'aéronef lors des manoeuvres de l'atterrisseur.

### PRESENTATION DE L'INVENTION

En vue de la réalisation de ce but, on propose un atterrisseur d'aéronef comportant les caractéristiques de la revendication 1. L'atterrisseur d'aéronef selon l'invention comporte une jambe montée pivotante sur une structure de l'aéronef selon un axe de pivotement entre une position déployée et une position rétractée , l'atterrisseur comportant une contrefiche à deux éléments articulés dont l'un est articulé sur la jambe, et l'autre est articulé sur la structure de l'aéronef, de sorte que lorsque la jambe est en position déployée, les deux éléments de la contrefiche sont verrouillés en position sensiblement alignée, l'atterrisseur étant en outre équipé d'un actionneur de manoeuvre rotatif ayant un arbre de sortie agissant sur l'un des éléments de la contrefiche pour provoquer le pivotement de la jambe entre les deux positions. Selon l'invention, l'actionneur de manoeuvre est monté pivotant sur la structure de l'aéronef autour d'un axe de rotation de l'arbre de sortie, l'actionneur de relevage ayant un carter relié par une bielle de réaction à la jambe pour reprendre un couple développé par l'actionneur de manoeuvre lors d'une manoeuvre de l'atterrisseur.

Grace à la disposition de l'invention, le couple développé par l'actionneur de manoeuvre n'est pas transmis à la structure de l'aéronef, mais est repris par l'atterrisseur lui-même.

Selon un mode particulier de réalisation de l'invention, lorsque l'atterrisseur est en position déployée, la bielle de réaction est alignée avec l'axe de pivotement de la jambe. Ainsi, en cas de mouvement ou de déformation de l'atterrisseur, par exemple à l'atterrissage, la bielle ne peut exercer sur le carter de l'actionneur de manoeuvre d'un moment qui entraînerait un déverrouillage de la contrefiche.

Selon un autre mode particulier de réalisation de l'invention, l'arbre de sortie de l'actionneur de manoeuvre agit sur l'élément de la contrefiche par l'intermédiaire d'un verrou à genouillère verrouillant les éléments de la contrefiche en position alignée lors que l'atterrisseur est en position déployée.

### PRESENTATION DES FIGURES

L'invention sera mieux comprise à la lumière de la description qui suit des modes particuliers de réalisation de l'invention, en référence aux figures des dessins annexés parmi lesquelles :
- La figure 1 est une vue en perspective d'un atterrisseur selon un premier mode particulier de réalisation de l'invention, représenté en position déployée ;
- La figure 2 est une vue de côté partielle de l'atterrisseur de la figure 1, représenté en position déployée ;
- La figure 3 est une vue de côté partielle de l'atterrisseur de la figure 1 représenté en position rétractée ;
- La figure 4 est une vue en perspective d'un atterrisseur selon un deuxième mode particulier de réalisation de l'invention, représenté en position déployée ;
- La figure 5 est une vue de côté de l'atterrisseur de la figure 4, représenté en position déployée ;
- La figure 6 est une vue de côté de l'atterrisseur de la figure 4 représenté en position rétractée ;
- La figure 7 est une vue en perspective partielle du verrou équipant la contrefiche de l'atterrisseur de la figure 4 ;
- La figure 8 est une autre vue en perspective partielle du verrou équipant la contrefiche de l'atterrisseur de la figure 4.

### DESCRIPTION DETAILLEE DE MODES DE REALISATION PARTICULIERS DE L'INVENTION

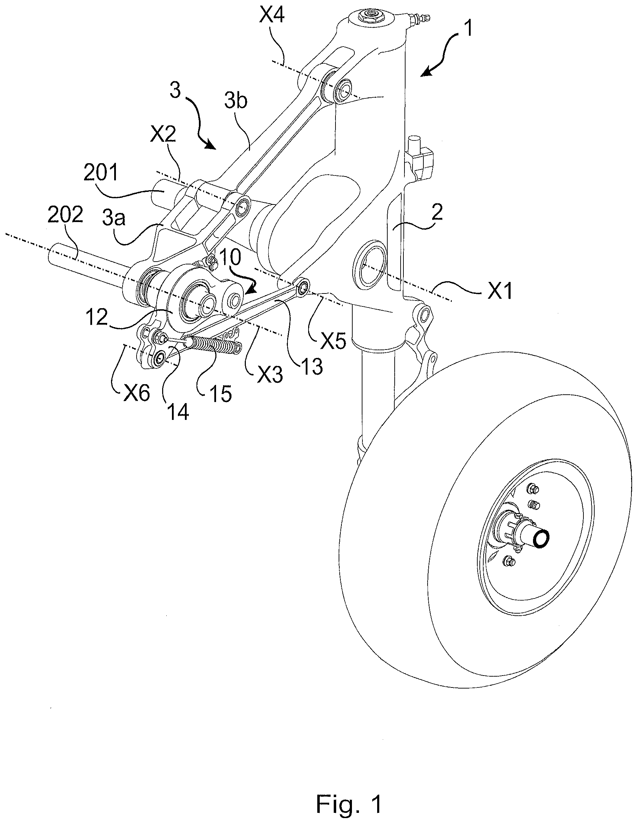

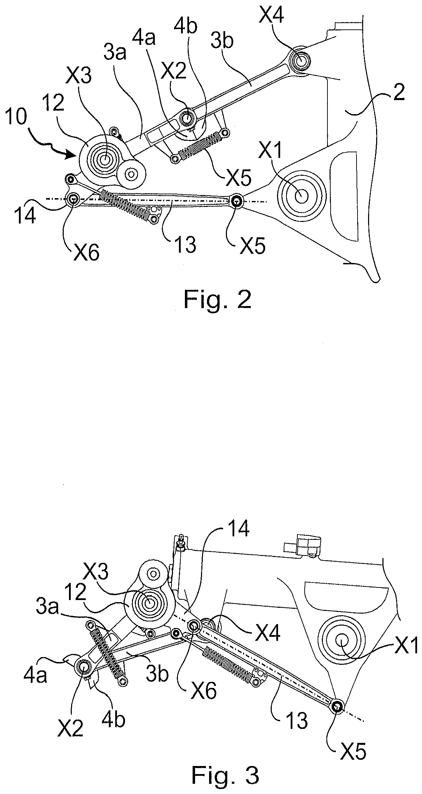

En référence aux figures 1 à 3, et conformément à un premier mode particulier de réalisation de l'invention, l'atterrisseur 1 comporte une jambe 2 montée articulée sur la structure d'un aéronef (non visible ici) par l'intermédiaire d'un pivot 201 selon un axe de pivotement X1, ici sensiblement horizontal, pour être mobile entre une position déployée illustrée aux figures 1 et 2 et une position rétractée illustrée à la figure 3. Dans ce qui suit, toutes les articulations mentionnées ont un axe de pivotement perpendiculaire au plan de la figure, de sorte que les axes de pivotements sont tous parallèles entre eux.

L'atterrisseur 1 comporte une contrefiche 3, comportant deux éléments de contreventement 3a et 3b articulés entre eux à un genou d'axe de pivotement X2. Le premier élément de contreventement 3a est articulé sur la structure de l'aéronef par l'intermédiaire d'un pivot 202 selon un axe de pivotement X3 tandis que le deuxième élément de contreventement 3b est articulé sur la jambe 2 selon un axe de pivotement X4. Dans la position déployée, les deux éléments de contreventement 3a,3b , et donc les axes de pivotements X2,X3,X4 sont sensiblement alignés. Cette position est définie par des butées respectives 4a,4b des éléments de contreventement 3a,3b, et est confirmée au moyen d'un ressort de confirmation 5 attelé aux deux éléments de contreventement 3a, 3b pour confirmer le contact entre les butées 4a,4b.

Un actionneur de manoeuvre rotatif 10 est disposé au niveau de l'axe de pivotement X3 de sorte que son arbre de sortie soit tournant selon l'axe de pivotement X3. L'arbre de sortie (non visible ici) est directement connecté au premier élément de contreventement 3a. L'actionneur de manoeuvre 10 comporte un carter 12 qui est monté à rotation libre selon l'axe X3. Une bielle de réaction 13 est articulée selon deux axes de pivotement X5,X6 entre d'une part la jambe 2 et d'autre part un maneton 14 solidaire du carter 12.

Ainsi, lors de l'alimentation de l'actionneur de manoeuvre rotatif 10, son arbre de sortie provoque la rotation du deuxième élément de contreventement 3b autour de l'axe X3. La reprise du couple de réaction est assurée par la bielle de réaction 13, mais sans qu'aucun couple ne soit transmis à la structure de l'aéronef.

On remarquera que dans la position déployée illustrée aux figures 1 et 2, la bielle de réaction 13 est en ligne avec l'axe de pivotement X1 d'articulation de la jambe 2, c'est -à-dire les axes de pivotements X1,X5,X6 sont alignés. Cette disposition évite, en cas de déformation ou de mouvement parasite de la jambe 2, par exemple lors de l'impact à l'atterrissage, que la bielle de réaction 13 puisse provoquer une rotation du carter 12 de nature à déverrouiller intempestivement la contrefiche.

Pour provoquer la rétraction de la jambe, il suffit de faire tourner l'arbre de sortie de l'actionneur dans le sens tendant à éloigner les butées 4a,4b l'une de l'autre, à l'encontre du ressort 5, brisant ainsi l'alignement de la contrefiche 3 et autorisant le pivotement de la jambe sous la traction exercée par le premier élément de contrefiche 3a, lui-même entraîné en rotation par l'arbre de sortie de l'actionneur de manoeuvre rotatif 10. Le mouvement se poursuit jusqu'à la position illustrée à la figure 3. Sur cette figure, on constate que la bielle de réaction 13 est en ligne avec l'axe de pivotement X3, c'est-à-dire que les axes de pivotements X3,X5,X6 sont alignés, assurant ainsi une stabilisation de la jambe 2 en position rétractée. Dans cette position, le maneton 14 et la bielle de réaction 13 sont alignés. La position d'alignement est de préférence définie par des butées solidaires respectivement de la bielle de réaction 13 et du maneton 14 qui viennent en contact l'une de l'autre dans la position alignée. Cette position est confirmée par un ressort de confirmation 15 attelé entre la bielle de réaction 13 et le maneton 14.

Dans le mouvement de la position déployée à la position rétractée, seuls les axes de pivotements X1 et X3 (qui correspondent aux pivots 201,202 sur la structure de l'aéronef) restent fixes. Tous les autres axes bougent, parallèlement à eux-mêmes. Le carter 12 de l'actionneur 10 et la jambe 2 ont tourné d'environ un quart de tour.

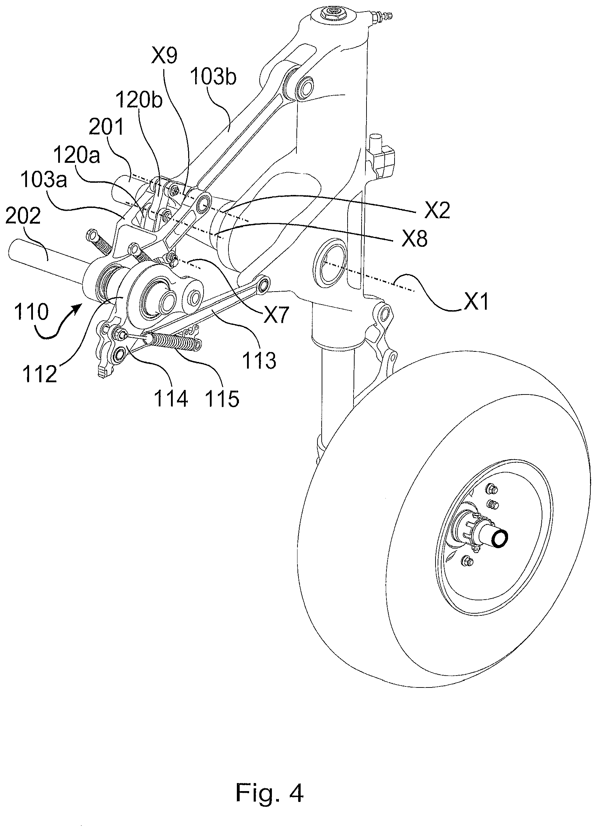

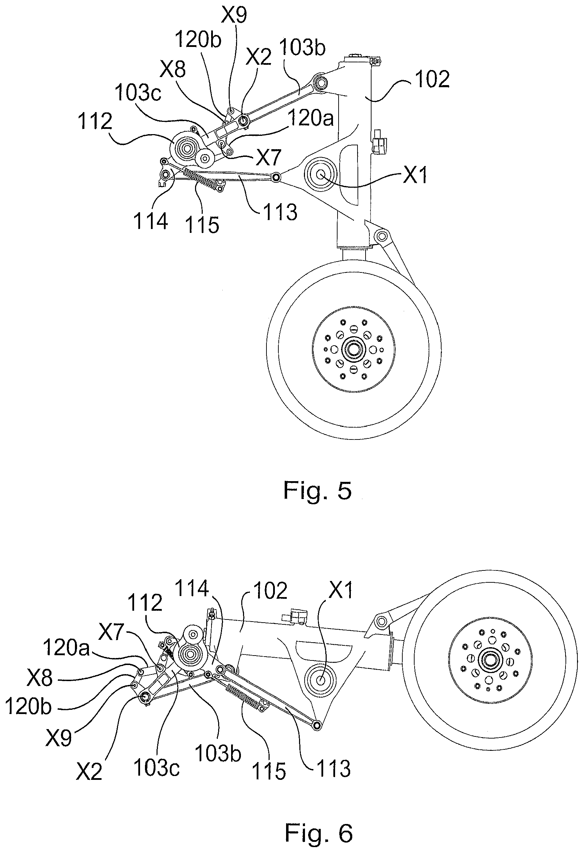

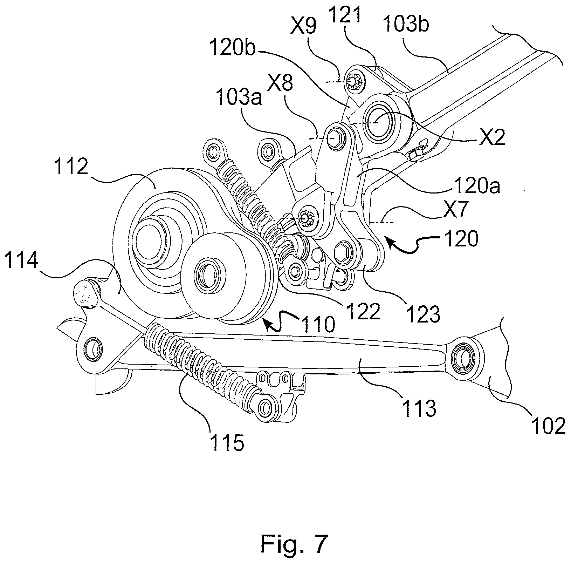

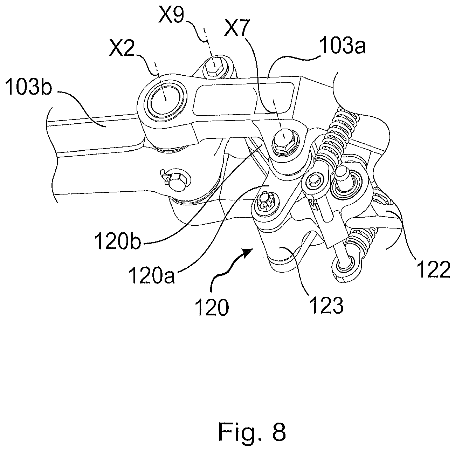

Selon un deuxième mode de réalisation illustré aux figures 4 à 8, sur lesquelles les éléments communs avec le mode de réalisation antérieur portent des références augmentées d'une centaine, l'arbre de sortie de l'actionneur de manoeuvre 110 n'est plus directement connecté au premier élément de contreventement 103a mais à un verrou à genouillère 120 assurant un verrouillage de la contrefiche 103 en position alignée.

Le verrou à genouillère 120 comporte un premier élément de verrouillage 120a qui est articulé sur le premier élément de contreventement 103a selon un axe de pivotement X7, et qui est articulé à un deuxième élément de verrouillage 120b selon un axe de pivotement X8, lui-même articulé sur un maneton 121 du deuxième élément de contreventement 1.03b selon un axe de pivotement X9. En position verrouillée, qui correspond à la position déployée de l'atterrisseur, les axes de pivotements X7,X8,X9 sont sensiblement alignés. Cette position est définie par des butées internes non représentées ici, mais qui jouent le même rôle que les butées 4a, 4b. Le maintien des éléments de verrouillage 120a,120b en position alignée entraîne le maintien en position alignée des éléments de contreventement 103a, 103b.

Comme auparavant, le carter 112 de l'actionneur de manoeuvre rotatif 110 comporte un maneton 114 relié à la jambe 102 par une bielle de réaction 113.

L'arbre de sortie comporte un maneton 122 de commande qui est attelé au premier élément de verrouillage 120a par une biellette 123. Partant de la position déployée illustrée à la figure 4, l'alimentation de l'actionneur de manoeuvre rotatif 110 amène l'arbre de sortie à tirer sur la biellette 123 via le maneton 122. Cette traction provoque le désalignement des éléments de verrouillage 120a, 120b, ce qui provoque le désalignement des éléments de contreventement 103a,103b. Le reste du mouvement vers la position rétractée est alors identique à celui du mode de réalisation précédent, si ce n'est que l'arbre de sortie de l'actionneur de relevage 110 n'est pas directement lié à l'un des éléments de contreventement, mais leur est lié via les éléments de verrouillage 120a,120b l'actionneur de manoeuvre rotatif 110 assure donc à la fois le déverrouillage et le désalignement de la contrefiche, et le relevage de la jambe.

De la même façon qu'auparavant, le couple de relevage développé par l'actionneur de manoeuvre 110 est transmis par la bielle de réaction 113 à la jambe 102, ce qui soulage la structure de l'aéronef.

## Revendications

1. Atterrisseur d'aéronef ayant une jambe (2;102) pourvue de moyens pour pivoter sur une structure de l'aéronef selon un axe de pivotement (X1) entre une position déployée et une position rétractée, l'atterrisseur comportant une contrefiche à deux éléments (3a, 3b; 103a, 103b) de contreventement articulés l'un à l'autre dont l'un est articulé sur la jambe et l'autre est pourvu de moyens d'articulation sur la structure de l'aéronef, de sorte que lorsque la jambe est en position déployée, les deux éléments de contreventement de la contrefiche sont verrouillés en position sensiblement alignée, l'atterrisseur étant en outre équipé d'un actionneur (10; 110) de manoeuvre rotatif ayant un arbre de sortie agissant sur l'un des éléments de contreventement de la contrefiche pour provoquer le pivotement de la jambe entre les deux positions, l'actionneur de manoeuvre étant pourvu de moyens pour pivoter sur la structure de l'aéronef autour d'un axe de rotation (X3) de l'arbre de sortie, **caractérisé en ce que** l'actionneur de manoeuvre comporte un carter (12;112) relié par une bielle de réaction (13;113) à la jambe pour reprendre un couple développé par l'actionneur de manoeuvre lors d'une manoeuvre de l'atterrisseur.

2. Atterrisseur selon la revendication 1, dans lequel l'arbre de sortie de l'actionneur (10) de manoeuvre est directement relié à l'un des éléments (3a, 3b) de contreventement.

3. Atterrisseur selon la revendication 1, dans lequel l'arbre de sortie de l'actionneur (110) de manoeuvre est relié aux éléments (103a, 103b) de contreventement via des éléments de verrouillage (120a, 120b) des éléments (103a, 103b) de contreventement en position alignée lorsque l'atterrisseur est en position déployée.

4. Atterrisseur selon la revendication 1, dans lequel l'axe de rotation (X3) de l'arbre de sortie de l'actionneur coïncide avec un axe de pivotement des moyens d'articulation de la contrefiche (3) sur la structure de l'aéronef.

## Patentansprüche

1. Luftfahrzeugfahrwerk, das ein Bein (2; 102) hat, das mit Mitteln versehen ist, um sich an einer Struktur des Luftfahrzeugs um eine Schwenkachse (X1) zwischen einer ausgefahrenen Position und einer eingefahrenen Position zu verschwenken, wobei das Fahrwerk eine Strebe mit zwei aneinander angelenkten Aussteifungselementen (3a, 3b; 103a, 103b) umfasst, von denen eines an dem Bein angelenkt ist und das andere mit Mitteln zur Gelenkverbindung an der Struktur des Luftfahrzeugs versehen ist, so dass, wenn das Bein in der ausgefahrenen Position ist, die beiden Aussteifungselemente der Strebe in einer im Wesentlichen fluchtenden Position verriegelt sind, wobei das Fahrwerk ferner mit einem Aktor (10; 110) zur Drehbetätigung ausgestattet ist, der eine Abtriebswelle hat, die auf eines der Aussteifungselemente der Strebe einwirkt, um das Verschwenken des Beins zwischen den beiden Positionen zu verursachen, wobei der Betätigungsaktor mit Mitteln versehen ist, um sich an der Struktur des Luftfahrzeugs um eine Drehachse (X3) der Abtriebswelle zu verschwenken, **dadurch gekennzeichnet, dass** der Betätigungsaktor ein Gehäuse (12; 112) umfasst, das durch ein Reaktionspleuel (13; 113) mit dem Bein verbunden ist, um ein von dem Betätigungsaktor während einer Betätigung des Fahrwerks entwickeltes Drehmoment aufzunehmen.

2. Fahrwerk nach Anspruch 1, bei dem die Abtriebswelle des Betätigungsaktors (10) direkt mit einem der Aussteifungselemente (3a, 3b) verbunden ist.

3. Fahrwerk nach Anspruch 1, bei dem die Abtriebswelle des Betätigungsaktors (110) mit den Aussteifungselementen (103a, 103b) über Verriegelungselemente (120a, 120b) verbunden ist, um die Aussteifungselemente (103, 103b) in fluchtender Position zu verriegeln, wenn das Fahrwerk in der ausgefahrenen Position ist.

4. Fahrwerk nach Anspruch 1, bei dem die Drehachse (X3) der Abtriebswelle des Aktors mit einer Schwenkachse der Mittel zur Gelenkverbindung der Strebe (3) an der Struktur des Luftfahrzeugs zusammenfällt.

## Claims

1. Aircraft undercarriage having a leg (2; 102) provided with means for pivoting on a structure of the aircraft about a pivot axis (X1) between a deployed position and a retracted position, the undercarriage including a strut (3a, 3b; 103a, 103b) comprising two brace elements articulated to one another, one of which is articulated to the leg and the other of which is provided with means for articulating it to the structure of the aircraft, so that when the leg is in the deployed position, the two brace elements of the strut are locked in a substantially aligned position, the undercarriage also being provided with a rotary actuator (10; 110) having an output shaft acting on one of the brace elements of the strut in order to cause the leg to pivot between the two positions, the actuator being provided with means for pivoting on the structure of the aircraft about a rotation axis (X3) of the output shaft, **characterized in that** the actuator has a casing (12; 112) connected by a reaction rod (13; 113) to the leg in order to take up a torque developed by the actuator when manoeuvring the undercarriage.

2. Undercarriage according to claim 1, wherein the output shaft of the actuator (10) is connected directly to one of the brace elements (3a, 3b).

3. Undercarriage according to claim 1, wherein the output shaft of the actuator (110) is connected to the brace elements (103a, 103b) via locking elements (120a, 120b) for locking the brace elements (103a, 103b) in the aligned position when the undercarriage is in the deployed position.

4. Undercarriage according to claim 1, wherein the rotation axis (X3) of the output shaft of the actuator coincides with a pivot axis of the means articulating the strut (3) to the structure of the aircraft.
